# EUROPÄISCHE PATENTSCHRIFT

(11) **EP 3 658 000 B1**
(45) Veröffentlichungstag und Bekanntmachung des Hinweises auf die Patenterteilung: **09.09.2026**
(21) Anmeldenummer: 18740172.4
(22) Anmeldetag: 09.07.2018
(51) Int. Cl.: A47L 15/42

(54) **WÄRMEPUMPE: KONDENSOR-WÄRMEABFUHR VIA ZUSÄTZLICHEM KREISLAUF**
HEAT PUMP: CONDENSER HEAT REMOVAL VIA ADDITIONAL CIRCUIT
POMPE À CHALEUR : ÉVACUATION DE LA CHALEUR DU CONDENSEUR VIA UN CIRCUIT SUPPLÉMENTAIRE

(30) Priorität: 27.07.2017 DE 102017212991
(43) Veröffentlichungstag der Anmeldung: 03.06.2020
(73) Patentinhaber: BSH Hausgeräte GmbH, 81739 München (DE)
(72) Erfinder: OBLINGER, Anton, 86637 Wertingen (DE)
(86) Internationale Anmeldenummer: PCT/EP2018/068526
(87) Internationale Veröffentlichungsnummer: WO 2019/020353

(56) Entgegenhaltungen:
- EP-A1- 2 309 052
- EP-A1- 3 148 392
- WO-A1-2016/091329
- CH-A2- 699 692

## Beschreibung

Die Erfindung betrifft eine Haushaltsgeschirrspülmaschine mit einem Aufnahmeraum zur Aufnahme von Spülgut, mit einem Pumpensumpf, mit einer Wärmepumpenanordnung, die bei ihrem Betrieb von einem Wärmeträger durchströmt wird, wobei die Wärmepumpenanordnung unter anderem einen Verflüssiger, insbesondere Plattenkondensor, umfasst, mit dessen Hilfe Wärme vom Wärmeträger auf eine in der Haushaltsgeschirrspülmaschine zirkulierende Spülflotte übertragbar ist, und mit wenigstens einer Sprühanordnung, mit deren Hilfe Spülflotte auf das Spülgut aufbringbar ist, wobei die Haushaltsgeschirrspülmaschine einen ersten Strömungsweg für die Spülflotte aufweist, der sich vom Pumpensumpf zur Sprühanordnung erstreckt, und wobei die Haushaltsgeschirrspülmaschine einen zweiten Strömungsweg aufweist, der sich vom Pumpensumpf zum Verflüssiger, insbesondere Plattenkondensor, erstreckt.

Ferner wird ein Verfahren zum Betreiben einer Haushaltsgeschirrspülmaschine mit einem Aufnahmeraum zur Aufnahme von Spülgut, mit einem Pumpensumpf, mit einer Wärmepumpenanordnung, die bei ihrem Betrieb von einem Wärmeträger durchströmt wird, wobei die Wärmepumpenanordnung unter anderem einen Verflüssiger umfasst, mit dessen Hilfe beim Betrieb der Wärmepumpenanordnung Wärme vom Wärmeträger auf eine in der Haushaltsgeschirrspülmaschine zirkulierende Spülflotte übertragen wird und mit wenigstens einer Sprühanordnung, mit deren Hilfe Spülflotte während eines Spülprogramms auf das Spülgut aufgebracht wird, vorgeschlagen.

Gattungsgemäße Haushaltsgeschirrspülmaschinen sind im Stand der Technik bekannt und dienen prinzipiell dem Reinigen und anschließenden Trocknen von verunreinigtem Spülgut, beispielsweise Geschirr oder Besteck. Während eines oder mehrerer Reinigungsschritte eines Spülprogramms wird das Spülgut mit Spülflotte bzw. Spülflüssigkeit (insbesondere Wasser oder Wasser mit Reinigungs- und/oder Klarspülmittel) beaufschlagt, um Verunreinigungen vom Spülgut zu lösen. Zum Trocknen des Spülguts weisen entsprechende Haushaltsgeschirrspülmaschinen ein Trocknungssystem für das gereinigte Spülgut auf, bei dem Luft das Wasser, das an dem gereinigten Spülgut haftet, aufnimmt und das Spülgut hierdurch trocknet. Die feuchte Luft wird anschließend nach außen geleitet oder an einer kalten Fläche vorbeigeführt, um Wasserdampf zu kondensieren.

Die Haushaltsgeschirrspülmaschine gemäß der vorliegenden Erfindung weist ferner eine nachfolgend beschriebene Wärmepumpenanordnung auf. Die Wärmepumpenanordnung umfasst prinzipiell einen als Verdampfer wirkenden Wärmetauscher zum Verdampfen eines Wärmeträgers und einen Verdichter zum Verdichten des verdampften Wärmeträgers. Mit Hilfe des Verdichters wird der in den Verdichter beim Betrieb der Wärmepumpenanordnung eintretende gasförmige Wärmeträger komprimiert, wobei er sich erwärmt.

Ferner umfasst die Wärmepumpenanordnung einen als Verflüssiger (andere Bezeichnung: Kondensor) wirkenden Wärmetauscher, in dem der erwärmte gasförmige Wärmeträger wieder kondensiert und hierbei Wärme abgibt, die beispielsweise für die Erwärmung von in der Haushaltsgeschirrspülmaschine vorhandener Spülflotte genutzt werden kann. Anschließend wird der verflüssigte Wärmeträger mit Hilfe eines Expansionsorgans (in der Regel eines Drosselventils oder eines Kapillarröhrchens) entspannt und gelangt schließlich wieder zurück zum Verdampfer, in dem er unter Wärmeaufnahme wieder in den gasförmigen Zustand übergeht, um dann erneut dem Verdichter zugeführt zu werden.

Die genannten Wärmetauscher können beispielsweise als Rohrschlange oder auch als flächig ausgebildeter Wärmetauscher (sogenannter Plattenwärmetauscher) vorliegen. In jedem Fall sind ein Einlass und ein Auslass für den Wärmeträger vorhanden.

Insbesondere der als Verflüssiger dienende Wärmetauscher besitzt vorzugsweise darüber hinaus einen Einlass und einen Auslass für die Spülflotte, so dass die Spülflotte an einer Trennwand des Verflüssigers vorbeigeführt werden kann, der den Verflüssiger intern in mehrere voneinander getrennte Bereiche trennt, wobei ein erster Bereich von der Spülflotte und ein zweiter Bereich vom Wärmeträger durchströmt wird. Im Bereich der Trennwand erfolgt schließlich die gewünschte Wärmeübertragung vom Wärmeträger auf die Spülflotte, um diese zu erwärmen.

Ebenso ist es auch denkbar, dass der Verflüssiger direkt an einer den Aufnahmeraum begrenzenden Wandung anliegt (von innen oder von außen) und die Spülflotte erwärmt wird, wenn sie im Aufnahmeraum an der entsprechenden Wandung vorbeifließt.

Die Geschirrspülmaschine der CH 699 692 A2 weist einen Bottich zur Aufnahme von Spülgut, einen Abfluss zur Abgabe von verbrauchtem Prozesswasser, einen ersten Wassertank zur temporären Speicherung von aus dem Bottich kommenden Prozesswasser, einen zweiten Wassertank zur temporären Aufnahme von aus dem Bottich kommenden Prozesswasser oder Frischwasser, und eine Wärmepumpe auf. Die Wärmepumpe ist dazu ausgestaltet, dem ersten Wassertank Wärme zu entziehen und diese Wärme einem anderen Teil des Geschirrspülers zuzuführen. Sie weist einen ersten Kondensator auf, um Wärme dem Prozesswasser im Bottich und/oder in einem am Bottich angeschlossenen Zirkulationskreislauf zuzuführen. Sie weist ferner einen zweiten Kondensator auf, um Wärme dem Prozesswasser oder Frischwasser im zweiten Wassertank zuzuführen.

Aufgabe der vorliegenden Erfindung ist es, eine gattungsgemäße Haushaltsgeschirrspülmaschine sowie ein gattungsgemäßes Verfahren zum Betreiben einer solchen weiterzubilden.

Die Aufgabe wird gelöst durch eine Haushaltsgeschirrspülmaschine und ein Verfahren mit den Merkmalen der unabhängigen Patentansprüche.

Erfindungsgemäß ist vorgesehen, dass dem ersten Strömungsweg der Spülflotte, der sich vom Pumpensumpf zur Sprühanordnung erstreckt, eine erste Fördereinrichtung zugeordnet ist, mit deren Hilfe Spülflotte entlang des ersten Strömungswegs förderbar ist. Ferner sieht die Erfindung vor, dass dem zweiten Strömungsweg, der sich vom Pumpensumpf zum Verflüssiger, insbesondere Plattenkondensor, erstreckt, eine zweite Fördereinrichtung zugeordnet ist, mit deren Hilfe Spülflotte entlang des zweiten Strömungswegs förderbar ist.

Der erste Strömungsweg sowie der zweite Strömungsweg sind vorzugsweise voneinander getrennte bzw. separierte Flüssigkeitswege.

Der jeweilige Strömungsweg wird jeweils vorzugsweise durch einen oder mehrere Leitungsabschnitte (z. B. Rohrleitungen) gebildet.

Die Sprühanordnung umfasst vorzugsweise einen oder mehrere rotierende Sprüharme, wie sie aus dem Stand der Technik bekannt sind. Auch kann die Sprühanordnung einen Spülflottenverteiler im Bereich der Deckenwandung der Haushaltsgeschirrspülmaschine umfassen.

Beim Pumpensumpf handelt es sich um eine Vertiefung in der den Aufnahmeraum nach unten hin begrenzenden Bodenwandung, in der sich die Spülflotte immer wieder sammelt, um von einer oder beiden Fördereinrichtungen in Richtung der Sprühanordnung und/oder des Verflüssigers gepumpt zu werden oder um die Haushaltsgeschirrspülmaschine über einen Ablauf zu verlassen.

Bei der Fördereinrichtung handelt es sich vorzugsweise um eine Flüssigkeitspumpe, deren Drehzahl bzw. Förderleistung vorzugsweise (z. B. mit Hilfe einer Steuer- und/oder Regelungseinheit der Haushaltsgeschirrspülmaschine) änderbar, insbesondere regelbar, ist.

In jedem Fall ermöglicht die Erfindung nun, dass der Verflüssiger und die Sprühanordnung durch die separaten Fördereinrichtungen jeweils individuell mit Spülflotte versorgt werden können. Die erfindungsgemäße Haushaltsgeschirrspülmaschine entspricht also vorzugsweise einer herkömmlichen Haushaltsgeschirrspülmaschine, bei der eine Zirkulationspumpe vorgesehen ist, mit der Spülflotte vom Pumpensumpf zu der Sprühanordnung befördert wird (die Zirkulationspumpe wird in diesem Fall durch die erste Fördereinrichtung gebildet). Darüber hinaus ist ein zweiter Strömungsweg vorhanden, über den Spülflotte vom Pumpensumpf zum Verflüssiger transportiert werden kann, wobei hierfür eine zweite Fördereinrichtung vorhanden ist, die in den zweiten Strömungsweg integriert ist.

Die Vorteile dieser Lösung liegen einmal darin, dass bestehende Haushaltsgeschirrspülmaschinen relativ einfach umkonstruiert werden können, um zur erfindungsgemäßen Lösung zu gelangen. Zudem ist der Energieverbrauch reduziert, da die Spülflotte, wenn der Verflüssiger nicht betrieben wird, nur durch den ersten Strömungsweg bewegt werden muss. Der Druckverlust ist hierbei geringer als im bekannten Fall, in dem nur eine Fördereinrichtung zum Einsatz kommt und die Spülflotte daher beim Transport zu der Sprühanordnung auch dann durch den Verflüssiger bewegt werden muss, wenn keine Erwärmung der Spülflotte durch den Verflüssiger gewünscht ist. Auch ist nun eine Erwärmung der Spülflotte durch den Transport durch den Verflüssiger oder an diesem vorbei möglich, ohne die Sprühanordnung mit Spülflotte versorgen zu müssen.

Im Übrigen sei an dieser Stelle darauf hingewiesen, dass die Haushaltsgeschirrspülmaschine selbstverständlich zusätzlich einen elektrischen Durchlauferhitzer aufweisen kann, mit dessen Hilfe die Spülflotte ebenfalls aufgeheizt werden kann. Der Verflüssiger und der Durchlauferhitzer können parallel oder zeitversetzt betrieben werden.

Nach einer vorteilhaften Weiterbildung werden der erste Strömungsweg und der zweite Strömungsweg zumindest teilweise durch separate Leitungsabschnitte gebildet. Vorzugsweise ist der erste Strömungsweg vollständig vom zweiten Strömungsweg getrennt, so dass die Spülflotte ausgehend vom Pumpensumpf ausschließlich entlang des ersten (bzw. zweiten) Strömungswegs strömt, sobald sie in den ersten (bzw. zweiten) Strömungsweg eingetreten ist.

Denkbar ist aber auch, dass die beiden Strömungswege einen gemeinsamen Leitungsabschnitt aufweisen. Dieser könnte sich vom Pumpensumpf zu einer Wasserweiche erstrecken, von der sich der gemeinsame Strömungsweg in den ersten und den zweiten Strömungsweg aufteilt, wobei der gemeinsame Strömungsweg in diesem Fall sowohl Teil des ersten als auch Teil des zweiten Strömungswegs ist bzw. diese mitbildet.

Nach einer vorteilhaften Weiterbildung der Erfindung liegen der Einlass und der Auslass des zweiten Strömungswegs in Förderrichtung des ersten Strömungswegs betrachtet vor dem Einlass des ersten Strömungswegs, insbesondere vor der ersten Fördereinrichtung des ersten Strömungswegs. Zweckmäßig kann es insbesondere sein, wenn während mindestens eines Schritts bzw. einer Phase wie z.B. Reinigungs- oder/oder Klarspülschritts eines durchzuführenden Spülprogramms, bei welchem Spülflüssigkeit auf eine geforderte Mindesttemperatur aufzuheizen und auf das Spülgut im Aufnahmeraum aufzubringen ist, sowohl die zweite Fördereinrichtung als auch die erste Fördereinrichtung eingeschaltet ist und die zu erwärmende Spülflüssigkeit zuerst den zweiten Strömungsweg zu ihrer Erwärmung mittels des Verflüssigers der in Betrieb gesetzten Wärmepumpenanordnung und dann anschließend den ersten Strömungsweg zur Abgabe in den Aufnahmeraum bzw. Spülraum mittels der ein oder mehreren Sprühanordnungen durchläuft. Der erste Strömungsweg und der zweite Strömungsweg sind dann vorzugsweise in dieser Reihenfolge fluidisch in Reihe bzw. hintereinander angeordnet. Dadurch wird sichergestellt, dass die mittels der zweiten Fördereinrichtung zum Verflüssiger des zweiten Strömungswegs transportierte Spülflüssigkeit im zweiten Strömungsweg mittels des dort eingefügten Verflüssigers erwärmt wird und dann anschließend sofort über den ersten Strömungsweg dem Aufnahmeraum über die dort vorhandenen ein oder mehreren Sprühanordnungen auf das zu waschende Spülgut verteilt wird. Dabei wird von der Spülflüssigkeit Wärme in den Aufnahmeraum, insbesondere auf das dort in mindestens einer Beladeeinheit gelagerte Spülgut, transferiert, so dass die Spülflüssigkeit, die sich am Boden, insbesondere im Pumpensumpf, des Spülbehälters der Haushaltsgeschirrspülmaschine sammelt, kühler als zuvor beim Verteilen, insbesondere Versprühen, im Aufnahmeraum ist. Diese abgekühlte, insbesondere um 2 - 10 °C kühlere, Spülflüssigkeit wird dann mittels der zweiten Fördereinrichtung des zweiten Strömungswegs wieder in dessen Einlass eingesaugt und zum Verflüssiger zur erneuten Erwärmung transportiert. Da die zum Verflüssiger geförderte Spülflüssigkeit somit stets eine geringere Temperatur als der Verflüssiger aufweist, transferiert dieser effizient Wärme auf die Spülflüssigkeit. Dies gilt insbesondere bei Verwendung eines Plattenkondensors.

Gemäß einer vorteilhaften Weiterbildung der Erfindung sind der Einlass sowie der Auslass des zweiten Strömungswegs und der Einlass sowie der Auslass des ersten Strömungswegs, insbesondere im Pumpensumpf bzw. Pumpentopf der Haushaltsgeschirrspülmaschine, vorzugsweise derart angeordnet und/oder derart ausgebildet, dass aus dem Auslass des zweiten Strömungswegs herausgeförderte Flüssigkeit vorrangig in den Einlass des ersten Strömungswegs von dessen Fördereinrichtung eingesaugt wird (und weniger oder gar nicht in den Einlass des zweiten Strömungswegs).

Dazu kann es insbesondere günstig sein, wenn der Auslass des zweiten Strömungswegs näher am Einlass des ersten Strömungswegs als am Einlass des zweiten Strömungswegs liegt. Insbesondere ist der Auslass des zweiten Strömungswegs in der Nähe des Einlasses des ersten Strömungswegs vorgesehen. Wenn in ein oder mehreren Phasen bzw. Teilprogrammschritten wie z.B. dem Reinigungsschritt und/oder Klarspülschritt eines durchzuführenden Spülprogramms die Wärmepumpenanordnung sowie die zweite Fördereinrichtung des zweiten Strömungswegs in Betrieb sind, um Spülflüssigkeit zu deren Erwärmung durch den zweiten Strömungsweg zum Verflüssiger bzw. Kondensor der Wärmepumpenanordnung zu fördern, so wird die aus dem Auslass des zweiten Strömungswegs herausgeförderte, mittels des Verflüssigers erwärmte Spülflüssigkeit unmittelbar und im Wesentlichen vollständig in den Einlass des ersten Strömungswegs durch dessen in Betrieb befindliche Fördereinrichtung eingesaugt und über die mit dem ersten Strömungsweg ausgangsseitig fluidisch verbundenen ein oder mehreren Sprüheinrichtungen im Aufnahmeraum der Haushaltsgeschirrspülmaschine auf das dort zu reinigende Spülgut verteilt. Dadurch ist ein effizienter Wärmetransfer vom Verflüssiger auf die Spülflüssigkeit und von dieser auf das zu reinigende Spülgut ermöglicht. Mit anderen Worten ausgedrückt ist diese Anordnung, bei der der Auslass des zweiten Strömungswegs näher am Einlass des ersten Strömungswegs als an seinem Einlass liegt, energetisch effizienter als eine Anordnung, bei der der Auslass des zweiten Strömungswegs näher an dessen Einlass wäre. Dadurch sind nämlich unerwünschte hydraulische und/oder thermische Kurzschlüsse bzw. Rückflüsse der aus dem Auslass des zweiten Strömungswegs herausgeförderten Spülflüssigkeit in den Einlass des zweiten Strömungswegs hinein reduziert oder weitgehend vermieden. (Denn der Einlass des zweiten Strömungswegs liegt von dessen Auslass weiter weg als der Einlass des ersten Strömungswegs, so dass die aus dem Auslass des zweiten Strömungswegs herausgeförderte Spülflüssigkeit eher bzw. mehr, d.h. vorrangig in den Einlass des ersten Strömungswegs von dessen Fördereinrichtung als in den Einlass des zweiten Strömungswegs eingesaugt wird.) Die Distanz zwischen dem Auslass des zweiten Strömungswegs und dem Einlass des ersten Strömungswegs ist also vorzugsweise kürzer als die Distanz zwischen dem Auslass des zweiten Strömungswegs und dem Einlass des zweiten Strömungswegs.

Insbesondere kann es zu diesem Zweck günstig sein, wenn der Auslass des zweiten Strömungswegs dem Einlass des ersten Strömungswegs entlang einer etwa geradlinigen Sichtverbindung, vorzugsweise im Pumpensumpf, gegenüberliegt.

Zusätzlich oder unabhängig hiervon kann es ggf. günstig sein, wenn der aus dem Auslass des zweiten Strömungswegs ausströmenden, erwärmten Spülflüssigkeit eine Hauptströmungsrichtung in Richtung des Einlasses des ersten Strömungswegs aufgeprägt wird. Dazu kann beispielsweise eine Düse am Auslass des zweiten Strömungswegs vorgesehen sein.

Zusätzlich oder unabhängig hiervon kann es auch zweckmäßig sein, wenn ein oder mehrere Strömungsleitelemente, insbesondere zwischen dem Auslass des zweiten Strömungswegs und dem Einlass des ersten Strömungswegs, vorgesehen sind, welche die aus dem Auslass des zweiten Strömungswegs herausströmende erwärmte Spülflüssigkeit in Richtung auf den Einlass des ersten Strömungswegs lenken.

Gemäß einer vorteilhaften Weiterbildung weist die Haushaltsgeschirrspülmaschine eine Steuer- und/oder Regeleinrichtung auf, die ausgebildet ist, die Förderleistung beider Fördereinrichtungen separat zu ändern. Die Förderleistungen (d. h. die zeitbezogene von der jeweiligen Fördereinrichtung geförderte Spülflottenmenge) der Fördereinrichtungen sind vorzugsweise stufenlos änderbar.

Vorzugsweise kommen als Fördereinrichtungen Flüssigkeitspumpen mit regelbarer Drehzahl zum Einsatz.

Auf diese Weise kann die Menge der vom Pumpensumpf abgezogenen Spülflotte je nach Bedarf, insbesondere in Abhängigkeit des Spülprogramms, auf die beiden Strömungswege aufgeteilt werden. So wäre es denkbar, dass die Spülflotte während eines Zeitraums, in dem primär die Spülflotte aufgeheizt werden soll (z. B. zu Beginn oder kurz vor Beginn eines Reinigungs- oder Klarspülabschnitts des Spülprogramms), ausschließlich oder zum überwiegenden Teil entlang des zweiten Strömungswegs und damit zum Verflüssiger bewegt wird.

Nach einer gewissen Zeit oder nach Abschluss der gewünschten Erwärmung der Spülflotte kann die Spülflotte schließlich ausschließlich oder zum überwiegenden Teil zur Sprühanordnung (d. h. entlang des ersten Strömungswegs) gefördert werden, um ein besonders gutes Reinigungsergebnis zu erzielen.

Das Verhältnis der Volumenströme der Spülflotte entlang des ersten und des zweiten Strömungswegs kann auf Basis von in der Steuer- und/oder Regelungseinheit hinterlegten Vorgaben im Verlauf des Spülprogramms immer wieder angepasst bzw. verändert werden, um ein optimales und energieeffizientes Reinigungsergebnis zu erzielen.

Nach einer vorteilhaften Weiterbildung ist vorgesehen, dass der Pumpensumpf einen ersten Einlass aufweist, über den Spülflotte beim Betrieb der ersten Fördereinrichtung in den ersten Strömungsweg eintritt. Ferner ist vorgesehen, dass der Pumpensumpf einen zweiten Einlass aufweist, über den Spülflotte beim Betrieb der zweiten Fördereinrichtung in den zweiten Strömungsweg eintritt. Bei den Einlässen kann es sich beispielsweise jeweils um eine Öffnung handeln, die unterhalb eines Siebs angeordnet ist, durch den die Spülflotte strömt, wenn sie vom Aufnahmeraum zurück in den Pumpensumpf strömt. Auch können beide Einlässe durch eine gemeinsame Öffnung gebildet werden, wobei dieser Einlass dann Teil beider Strömungswege ist.

Gemäß der Erfindung weist die zweite Fördereinrichtung eine Förderrichtung auf, in der die Spülflotte beim Betrieb der zweiten Fördereinrichtung durch die genannte Fördereinrichtung gefördert wird, wobei die zweite Fördereinrichtung derart ausgebildet ist, dass Spülflotte entgegen der genannten Förderrichtung durch die zweite Fördereinrichtung strömen kann, wenn die zweite Fördereinrichtung nicht betrieben wird. Hierdurch ist es möglich, dass im Verflüssiger vorhandene Spülflotte entlang des zweiten Strömungswegs (oder eines Teils desselben) zurück in den Pumpensumpf strömen kann, wobei die Spülflotte hierbei die Fördereinrichtung passiert. Der Verflüssiger kann hierdurch bezogen auf die Spülflotte entleert werden. Dies ist beispielsweise am Ende des Spülprogramms oder vor bzw. während Abschnitten des Spülprogramms sinnvoll, wenn die gesamte Spülflotte entlang des ersten Strömungswegs zur Sprühanordnung strömen soll.

Vorzugsweise ist in den zweiten Strömungsweg ein Ventil integriert. Wird das Ventil durch die Steuer- und/oder Regelungseinheit geöffnet, während die zweite Fördereinrichtung stillsteht, so fließt Spülflotte aus dem Verflüssiger in Richtung des Pumpensumpfs. Ist das Ventil geschlossen, so erfolgt keine Entleerung.

Nach einer vorteilhaften Weiterbildung weist die Haushaltsgeschirrspülmaschine einen Auslass auf, über den die Spülflotte aus dem zweiten Strömungsweg austritt und in den Aufnahmeraum bzw. den Pumpensumpf strömt, wenn die zweite Fördereinrichtung betrieben wird. Der zweite Strömungsweg verläuft in diesem Fall geschlossen, d. h. die Spülflotte ist während ihres Transports durch den zweiten Strömungsweg stets von einem Leitungsabschnitt oder einem sonstigen Bauteil (z. B. der Fördereinrichtung oder dem Verflüssiger) umgeben.

Gemäß einer vorteilhaften Weiterbildung ist der Auslass des zweiten Strömungswegs im Bereich des Pumpensumpfs oder im Bereich einer den Aufnahmeraum begrenzenden Wandung angeordnet. Beispielsweise kann der Auslass im Bereich einer Seitenwandung angeordnet sein, so dass die Spülflotte nach Verlassen des zweiten Strömungswegs an der Seitenwandung nach unten und im Bereich der Bodenwandung in den Pumpensumpf strömt. Der Auslass kann auch als Düse ausgebildet sein, so dass die Spülflotte beim Verlassen des zweiten Strömungswegs in den Aufnahmeraum gespritzt wird. Auch mehrere Auslässe sind denkbar, wobei sich der zweite Strömungsweg in diesem Fall aufgabeln sollte.

Nach einer vorteilhaften Weiterbildung ist der Auslass des zweiten Strömungswegs in vertikaler Richtung oberhalb des ersten Einlasses (d. h. des Einlasses des ersten Strömungswegs) des Pumpensumpfs und/oder oberhalb des zweiten Einlasses (d. h. des Einlasses des zweiten Strömungswegs) des Pumpensumpfs angeordnet. Insbesondere sollte der Auslass in vertikaler Höhe über dem maximalen Spülflottenpegel im Pumpensumpf liegen, wenn der Verflüssiger über den zweiten Einlass entleert werden soll. Wird der Verflüssiger über den Einlass des zweiten Strömungswegs entleert, so kann Luft über den Auslass in den genannten Strömungsweg und schließlich in den Verflüssiger eintreten, um den nötigen Druckausgleich sicherzustellen.

Generell sollte die Öffnung (zweiter Einlass oder Auslass), über den beim Entleeren des Verflüssigers Luft in den zweiten Strömungsweg strömt, oberhalb des ersten Einlasses liegen.

Vorzugsweise ist ein Spülflottenauslass des Verflüssigers höher platziert als die Öffnung, über den die Spülflotte den zweiten Strömungsweg während der Entleerung des Verflüssigers verlässt, um eine schwerkraftbedingte Entleerung zu ermöglichen. Der zweite Strömungsweg und/oder der Verflüssiger sollten darüber hinaus eine Druckausgleichsöffnung haben, über den Luft in den zweiten Strömungsweg oder den Verflüssiger strömen kann, wenn die Spülflotte aus dem Verflüssiger entleert wird.

Das erfindungsgemäße Verfahren zeichnet sich dadurch aus, dass die Spülflotte während eines Spülprogramms wenigstens zeitweise mit Hilfe einer ersten Fördereinrichtung vom Pumpensumpf zur Sprühanordnung und wenigstens zeitweise mit Hilfe einer zweiten Fördereinrichtung vom Pumpensumpf zum Verflüssiger bewegt wird. Die Haushaltsgeschirrspülmaschine umfasst also zwei Strömungswege, die auch gemeinsame Abschnitte aufweisen können. In jedem Fall ist jedem Strömungsweg eine eigenen Fördereinrichtung zugeordnet, so dass Spülflotte entweder nur entlang des ersten Strömungswegs mit Hilfe der ersten Fördereinrichtung oder nur entlang des zweiten Strömungswegs mit Hilfe der zweiten Fördereinrichtung bewegt werden kann. Ebenso können beide Fördereinrichtungen betrieben werden, so dass ein Teil der Spülflotte entlang des ersten Strömungswegs und ein zweiter Teil der Spülflotte entlang des zweiten Strömungswegs bewegt werden kann. Das Verhältnis der jeweiligen Volumenströme kann gleich oder auch unterschiedlich hoch sein. Auch kann das Verhältnis während eines Spülprogramms verändert werden.

Vorzugsweise weist die Haushaltsgeschirrspülmaschine ein oder mehrere der vorangegangenen oder nachfolgend beschriebenen Merkmale auf.

Gemäß einer vorteilhaften Weiterbildung werden die erste Fördereinrichtung und die zweite Fördereinrichtung während des Spülprogramms zumindest zeitweise gleichzeitig betrieben. Die Spülflotte wird in diesem Fall sowohl dem Verflüssiger als auch der Sprühanordnung zugeführt. Wird die Wärmepumpenanordnung in diesem Fall betrieben, so erfolgt gleichzeitig eine Erwärmung der Spülflotte als auch ein Aufsprühen derselben auf das Spülgut. Dies ist beispielsweise vor oder während eines Reinigungsschritts des Spülprogramms oder vor oder während eines Klarspülschritts desselben von Vorteil, da hier warme Spülflotte benötigt wird.

Nach einer vorteilhaften Weiterbildung wird während des Spülprogramms zumindest zeitweise nur eine der beiden Fördereinrichtungen betrieben. Beispielsweise könnte vor oder zu Beginn eines Reinigungsschritts ausschließlich die zweite Fördereinrichtung betrieben werden, um die Spülflotte möglichst schnell aufzuheizen. Nach Erreichen einer bestimmten Spülflottentemperatur könnte schließlich zusätzlich oder ausschließlich die erste Fördereinrichtung betrieben werden, um die Spülflotte auf das Spülgut aufzuspritzen.

Gemäß einer vorteilhaften Weiterbildung ist die Förderleistung der ersten Fördereinrichtung während des Spülprogramms zumindest zeitweise höher oder niedriger als die Förderleistung der zweiten Fördereinrichtung. Vorzugsweise ist die Förderleistung der zweiten Fördereinrichtung während der Abschnitte des Spülprogramms höher, in denen eine rasche Aufheizung der Spülflotte gewünscht ist. Die Förderleistung der ersten Fördereinrichtung sollte hingegen dann höher sein, wenn eine Reinigung des Spülguts durch Aufspritzen der zuvor erwärmten Spülflotte im Vordergrund steht.

Die Förderleistungen können sich jeweils schrittweise oder kontinuierlich ändern, wobei die Änderung auf Basis eines in der Steuer- und/oder Regelungseinheit hinterlegten Spülprogramms und initiiert durch die Steuer- und/oder Regelungseinheit erfolgt. Der Gesamtvolumenstrom der Spülflotte entlang des ersten und des zweiten Strömungswegs sollte im Übrigen einen definierten Maximalvolumenstrom nicht überschreiten, um zu verhindern, dass eine oder beide Fördereinrichtungen Luft ziehen. Insbesondere ist es von Vorteil, wenn die Summe aus beiden Volumenströmen (von denen einer zeitweise auch Null sein kann) stets einem definierten Wert entspricht oder unterhalb eines Maximalwerts liegt.

Nach einer vorteilhaften Weiterbildung wird das Verhältnis der Förderleistungen beider Fördereinrichtungen während des Spülprogramms ein- oder mehrmals geändert. Die zeitliche und mengenmäßige Änderung sollte im Spülprogramm hinterlegt und von der Steuer- und/oder Regelungseinheit bewirkt werden.

Erfindungsgemäß weist der Verflüssiger einen Hohlraum auf, durch den die Spülflotte beim Betrieb der zweiten Fördereinrichtung strömt, wobei der Hohlraum während und/oder nach dem Ende eines Spülprogramms ganz oder teilweise entleert wird, wobei sich im Hohlraum befindliche Spülflotte während der Entleerung in den Aufnahmeraum bzw. den Pumpensumpf strömt. Ein Entleeren ist vorzugsweise dann sinnvoll, wenn die Spülflotte die gewünschte Temperatur erreicht hat und ausschließlich ein Auftragen der Spülflotte auf das Spülgut gewünscht ist. Auch kann der Verflüssiger nach Abschluss eines Spülprogramms entleert werden.

Die Erfindung und ihre vorteilhaften Aus- und Weiterbildungen sowie deren Vorteile werden nachfolgend anhand von Zeichnungen näher erläutert. Es zeigen, jeweils in einer schematischen Prinzipskizze:
- **Figur 1**: einen Ausschnitt einer erfindungsgemäßen Haushaltsgeschirrspülmaschine,
- **Figur 2**: einen Ausschnitt einer weiteren erfindungsgemäßen Haushaltsgeschirrspülmaschine, und
- **Figur 3**: einen Ausschnitt einer weiteren erfindungsgemäßen Haushaltsgeschirrspülmaschine.

In den folgenden Figuren sind einander entsprechende Teile mit denselben Bezugszeichen versehen. Dabei sind nur diejenigen Bestandteile einer Haushaltsgeschirrspülmaschine 1 mit Bezugszeichen versehen und erläutert, welche für das Verständnis der Erfindung erforderlich sind. Es versteht sich von selbst, dass die erfindungsgemäße Haushaltsgeschirrspülmaschine 1 weitere Teile und Baugruppen umfassen kann.

Die erfindungsgemäße Haushaltsgeschirrspülmaschine 1 umfasst mehrere Wandungen 16 (in Form von Seitenwandungen, einer Rückwandung, einer Deckenwandung und einer Bodenwandung), die einen innenliegenden Aufnahmeraum 2 begrenzen, der der Aufnahme von Spülgut 3 dient. Die gezeigten Abschnitte sind selbstverständlich von einem nicht gezeigten Gehäuse mit einer Tür umschlossen.

Zur Aufnahme des Spülguts 3 sind im Aufnahmeraum 2 beispielsweise ein oder mehrere Geschirrkörbe 21 vorhanden. Ferner sind ein oder mehrere Sprühanordnungen 7 vorhanden, mit deren Hilfe das Spülgut 3 z. B. während eines Reinigungs- oder Klarspülschritts eines Spülprogramms mit Spülflotte bzw. Spülflüssigkeit 6, d. h. Wasser oder Wasser mit Reinigungs- und/oder Klarspülmittel versetzt, beaufschlagt werden kann. Die Sprühanordnung 7 umfasst im gezeigten Beispiel einen dem oberen Geschirrkorb 21 zugeordneten Abschnitt und einen dem unteren Geschirrkorb 21 zugeordneten Abschnitt. Sie kann insbesondere einen oberen, rotierend gelagerten Sprüharm und einen unteren, rotierend gelagerten Sprüharm aufweisen.

Zur Versorgung mit Frischwasser ist die Haushaltsgeschirrspülmaschine 1 über eine nicht gezeigte Wasserzufuhr mit einem ebenfalls nicht gezeigten Frischwassernetz verbunden. Ebenso ist ein Ablauf 17 vorhanden, über den die Haushaltsgeschirrspülmaschine 1 mit einem nicht gezeigten Abwassernetz in Verbindung steht und über den verschmutzte Spülflotte 6 aus einem im Bereich der Bodenwandung angeordneten Pumpensumpf 4 der Haushaltsgeschirrspülmaschine 1 abgeführt werden kann.

Bevor die Spülflotte 6 jedoch über den Ablauf 17 entsorgt wird, wird sie in der Regel zunächst mehrfach im Kreislauf geführt und über die Sprühanordnung 7 auf das Spülgut 3 aufgebracht, um Verunreinigungen zu lösen. Hierfür umfasst die Haushaltsgeschirrspülmaschine 1 einen ersten Strömungsweg 8, der sich vom Pumpensumpf 4 zu der Sprühanordnung 7 bzw. deren oben genannten Abschnitten erstreckt.

Vorzugsweise umfasst der erste Strömungsweg 8 einen oder mehrere Leitungsabschnitte 12, z. B. in Form von Rohrleitungen. Zwischen der ersten Fördereinrichtung 10 und den genannten Abschnitten der Sprühanordnung 7 kann sich eine nicht gezeigte Strömungsweiche befinden, über die der Volumenstrom der Spülflotte 6 zu den einzelnen Abschnitten der Sprühanordnung 7 festgelegt ist oder bei einer aktiven Strömungsweiche über eine nicht gezeigte Steuer- und/oder Regelungseinheit geregelt werden kann.

Der erste Strömungsweg 8 beginnt vorzugsweise im Bereich eines ersten Einlasses 13 im Pumpensumpf 4 und erstreckt sich bis zu den Spülflottenauslässen der Sprühanordnung 7. Er umfasst eine erste Fördereinrichtung 10 für die Spülflüssigkeit.

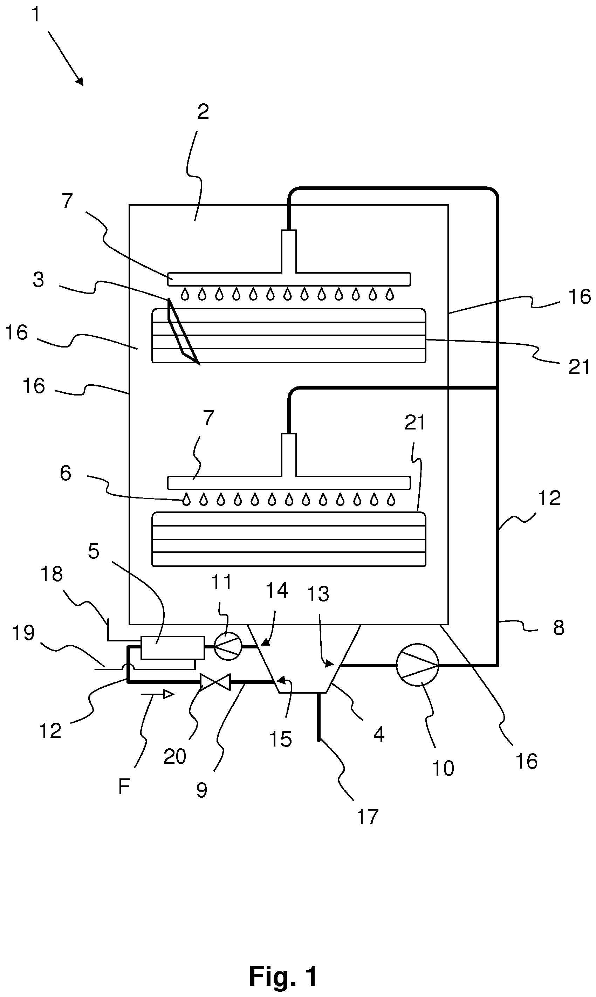

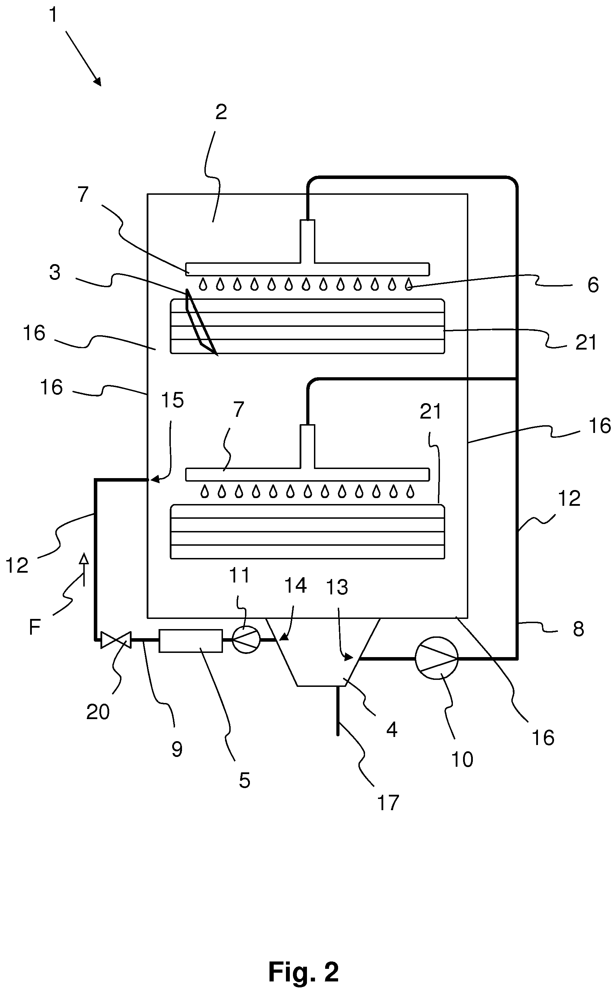

Weiterhin ist ein zweiter Strömungsweg 9 mit einem Einlass 14 im Pumpensumpf 4 und einem Auslass 15 im Pumpensumpf bzw. Pumpentopf 4 (siehe Figur 1) oder im Bereich einer den Aufnahmeraum 2 begrenzenden Wandung 16 vorgesehen (siehe Figur 2). Er weist eine zweite Fördereinrichtung 11 für die Spülflüssigkeit auf.

Vorzugsweise handelt es sich bei der ersten wie auch der nachfolgend beschriebenen zweiten Fördereinrichtung 11 um eine Flüssigkeitspumpe, deren Förderleistung mit Hilfe der Steuer- und/oder Regelungseinheit anpassbar ist.

Um die Spülflotte 6 zu erwärmen, umfasst die Haushaltsgeschirrspülmaschine 1 eine Wärmepumpenanordnung mit einem Verdampfer, einem Verdichter, einem Expansionsorgan und einem Verflüssiger 5, wobei die drei zuerst genannten Bauteile nicht gezeigt sind. Diese können daher an beliebiger Stelle angeordnet sein, wobei der Verdampfer vorzugsweise im Bereich einer der genannten Wandungen 16 angeordnet ist, um einen Wärmeübergang von der Spülflotte 6 auf den Wärmeträger zu ermöglichen, wenn dieser den Verflüssiger 5 passiert (dies ist insbesondere während eines Trocknungsschritts von Vorteil, da hier Wasserdampf im Aufnahmeraum 2 kondensieren soll). Vorzugsweise ist der Verflüssiger ein Plattenkondensor.

Wird nun der Verdichter aktiviert, so wird der im Bereich des Verdichters gasförmig vorliegende Wärmeträger verdichtet. Der verdichtete Wärmeträger strömt weiter zum Verflüssiger 5, wo er Wärme abgibt und dabei kondensiert. Der flüssige Wärmeträger gelangt anschließend zum Expansionsorgan, das eine Druckverminderung bewirkt. Im weiteren Verlauf strömt der noch immer oder zumindest teilweise flüssige Wärmeträger zum Verdampfer. Dort entzieht er der Umgebung Wärme und wird hierdurch in den gasförmigen Aggregatszustand überführt, um schließlich wieder zum Verdichter zu gelangen, so dass sich der Wärmeträgerkreislauf schließt. Für den Einlass und den Auslass des Wärmeträgers umfasst der Verflüssiger 5 im Übrigen einen mit einer ersten Wärmeträgerleitung 18 verbundenen Eingang und einen mit einer zweiten Wärmeträgerleitung 19 verbundenen Ausgang, wobei die erste Wärmeträgerleitung 18 mit dem Verdichter und die zweite Wärmeträgerleitung 19 mit dem Expansionsorgan verbunden ist.

Im gezeigten Beispiel ist der Verflüssiger 5 unterhalb der Bodenwandung angeordnet. Selbstverständlich kann dieser auch im Bereich der Deckenwandung oder einer der Seitenwandungen platziert sein.

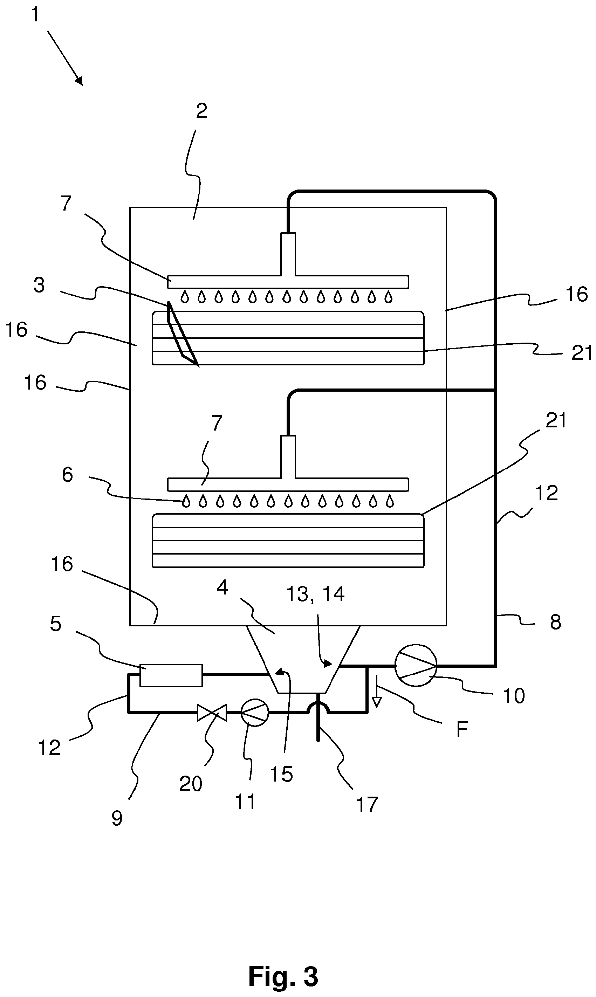

Um die Spülflotte 6 zum Verflüssiger 5 zu transportieren, umfasst die Haushaltsgeschirrspülmaschine 1 den zweiten Strömungsweg 9 für die Spülflotte 6, der sich von einem zweiten Einlass 14 im Pumpensumpf 4 zum Verflüssiger 5 und von dort zu einem Auslass 15 erstreckt. Insbesondere liegt der Einlass 14 und der Auslass 15 des zweiten Strömungswegs 9 in Förderrichtung des ersten Strömungswegs 8 betrachtet vor dessen Einlass 13, insbesondere vor der ersten Fördereinrichtung 10 des erstens Strömungswegs 8. Während der Auslass 15 in den Figuren 1 und 3 in den Pumpensumpf 4 mündet, zeigt Figur 2 eine Lösung, bei der sich der Auslass 15 im Bereich einer seitlichen Wandung 16 befindet. Denkbar wäre auch die Platzierung im Bereich einer der restlichen Wandungen 16. Über den Auslass 15 strömt die vom Verflüssiger 5 erwärmte Spülflotte 6 zurück in den Pumpensumpf 4 oder den Aufnahmeraum 2 und gelangt von dort in den Pumpensumpf 4. Die Förderrichtung der ersten und der zweiten Strömungseinrichtung sind durch einen Pfeil mit dem Bezugszeichen F gekennzeichnet.

Wenn im jeweilig durchzuführenden Spülprogramm ein Spülschritt wie z.B. ein Reinigungsschritt oder Klarspülschritt durchgeführt wird, während dem Spülflüssigkeit bzw. Spülflotte mit Hilfe der Wärmepumpenanordnung erwärmt wird, so wird die Spülflüssigkeit im Pumpensumpf 4 mittels der zweiten Fördereinrichtung 11 in den Einlass des zweiten Strömungswegs 9 hineingesaugt und zum Verflüssiger 5 transportiert. Dort wird sie von diesem erwärmt und durch die zweite Fördereinrichtung 11 über den Auslass 15 in den Pumpensumpf 4 zurückgespeist. Die aus dem Auslass 15 ausströmende Spülflüssigkeit wird mittels der ersten Fördereinrichtung 10 in den Einlass 13 des ersten Strömungswegs 8 eingesaugt und über die ein oder mehreren Leitungsabschnitte 12 den ein oder mehreren Sprühanordnungen im Aufnahmeraum 2 zugeführt. Diese versprühen die Flüssigkeit im Aufnahmeraum 2 und beaufschlagen mit dieser das zu reinigende Spülgut 3 in den ein oder mehreren Beladeeinheiten wie z.B. Geschirrkörben und/oder Besteckschublade. Dabei transferiert die Flüssigkeit Wärme an das Spülgut, die Beladeeinheiten 21, die Luft im Aufnahmeraum, und/oder an die Wände des Aufnahmeraums, so dass sie, nachdem sie vom Spülgut und/oder den Wänden des Aufnahmeraums nach unten zum Boden des Aufnahmeraums abgetropft ist und sich im Pumpensumpf 4 sammelt, am Einlass 14 des zweiten Strömungswegs eine niedrigere Temperatur als am Auslass 15 aufweist. Sie wird im Pumpensumpf erneut in den Einlass 14 durch die zweite Fördereinrichtung 11 eingesaugt, vom Verflüssiger 5 erwärmt, aus dem Auslass 15 gefördert, in den Einlass 13 des ersten Strömungswegs 8 eingesaugt und zu den ein oder mehreren Sprühanordnungen 7 transportiert. Je größer dabei die Differenz zwischen der Temperatur der beim Verflüssiger 5 ankommenden und der Temperatur der vom Verflüssiger wegströmenden Spülflüssigkeit ist, desto größer ist der vom Verflüssiger bewirkbare Wärmeübertrag auf die Spülflüssigkeit (bei gegebener Wärmeleistung des Verflüssigers).

Verallgemeinert ausgedrückt ist es zweckmäßig, wenn die zu erwärmende Spülflüssigkeit zuerst den zweiten Strömungsweg zu ihrer Erwärmung mittels des Verflüssigers der Wärmepumpenanordnung und dann anschließend den ersten Strömungsweg zur Abgabe in den Spülraum mittels der ein oder mehreren Sprühanordnungen durchläuft.

Zweckmäßig kann es dazu sein, wenn der Auslass 15 des zweiten Strömungswegs 9 näher am Einlass 13 des ersten Strömungswegs 8 als am Einlass 14 des zweiten Strömungswegs 9 liegt. Insbesondere ist es günstig, wenn der Auslass 15 des zweiten Strömungswegs 9 in der Nähe des Einlasses 13 des ersten Strömungswegs 8 vorgesehen ist. Wenn in ein oder mehreren Phasen bzw. Schritten eines durchzuführenden Spülprogramms die Wärmepumpenanordnung sowie die zweite Fördereinrichtung 11 des zweiten Strömungswegs 9 in Betrieb sind, um Spülflüssigkeit zu deren Erwärmung durch den zweiten Strömungsweg 9 zum Verflüssiger bzw. Kondensor 5 der Wärmepumpenanordnung zu fördern, so wird die aus dem Auslass 15 des zweiten Strömungswegs 9 herausgeförderte, mittels des Verflüssigers 5 erwärmte Spülflüssigkeit unmittelbar und im Wesentlichen vollständig in den Einlass 13 des ersten Strömungswegs 8 durch dessen ebenfalls in Betrieb befindliche Fördereinrichtung 10 eingesaugt und über die mit dem ersten Strömungsweg ausgangsseitig fluidisch verbundenen ein oder mehreren Sprüheinrichtungen wie z.B. 7 im Aufnahmeraum der Haushaltsgeschirrspülmaschine auf das dort zu reinigende Spülgut verteilt. Dadurch ist ein effizienter Wärmetransfer vom Verflüssiger auf die Spülflüssigkeit und von dieser auf das zu reinigende Spülgut ermöglicht. Denn unerwünschte hydraulische und/oder thermische Kurzschlüsse bzw. Rückflüsse der aus dem Auslass des zweiten Strömungswegs herausgeförderten Spülflüssigkeit in den Einlass des zweiten Strömungswegs hinein sind reduziert oder weitgehend vermieden, weil ja der Einlass des zweiten Strömungswegs von dessen Auslass weiter weg als der Einlass des ersten Strömungswegs liegt, so dass die aus dem Auslass des zweiten Strömungswegs herausgeförderte Spülflüssigkeit eher bzw. mehr in den Einlass des ersten Strömungswegs von dessen Fördereinrichtung als in den Einlass des zweiten Strömungswegs eingesaugt wird. Die Distanz zwischen dem Auslass des zweiten Strömungswegs und dem Einlass des ersten Strömungswegs ist also vorzugsweise kürzer als die Distanz zwischen dem Auslass des zweiten Strömungswegs und dem Einlass des zweiten Strömungswegs. Insbesondere kann es förderlich sein, wenn der Auslass des zweiten Strömungswegs dem Einlass des ersten Strömungswegs entlang einer etwa geradlinigen Sichtverbindung, vorzugsweise im Pumpensumpf, gegenüberliegt.

Zusätzlich oder unabhängig hiervon kann es ggf. günstig sein, wenn der aus dem Auslass 15 des zweiten Strömungswegs 9 ausströmenden, erwärmten Spülflüssigkeit eine Hauptströmungsrichtung in Richtung des Einlasses 13 des ersten Strömungswegs 8 aufgeprägt wird. Dazu kann beispielsweise eine Düse am Ausla15 ss des zweiten Strömungswegs vorgesehen sein.

Zusätzlich oder unabhängig hiervon kann es auch zweckmäßig sein, wenn ein oder mehrere Strömungsleitelemente, insbesondere zwischen dem Auslass 15 des zweiten Strömungswegs 9 und dem Einlass 13 des ersten Strömungswegs 8, vorgesehen sind, welche die aus dem Auslass 15 des zweiten Strömungswegs 9 herausströmende erwärmte Spülflüssigkeit in Richtung auf den Einlass 13 des ersten Strömungswegs 9 lenken.

In Verallgemeinerung sind der Einlass sowie der Auslass des zweiten Strömungswegs und der Einlass sowie der Auslass des ersten Strömungswegs, insbesondere im Pumpensumpf bzw. Pumpentopf der Haushaltsgeschirrspülmaschine, vorzugsweise derart angeordnet und/oder derart ausgebildet, dass aus dem Auslass des zweiten Strömungswegs herausgeförderte Flüssigkeit vorrangig in den Einlass des ersten Strömungswegs von dessen Fördereinrichtung eingesaugt wird (und weniger oder gar nicht in den Einlass des zweiten Strömungswegs).

Günstig kann es insbesondere sein, wenn während mindestens eines Schritts bzw. einer Phase wie z.B. Reinigungs- oder/oder Klarspülschritts eines durchzuführenden Spülprogramms, bei welchem Spülflüssigkeit auf eine geforderte Mindesttemperatur aufzuheizen und auf das Spülgut im Aufnahmeraum aufzubringen ist, die zu erwärmende Spülflüssigkeit zuerst den zweiten Strömungsweg zu ihrer Erwärmung mittels des Verflüssigers der in Betrieb gesetzten Wärmepumpenanordnung und dann anschließend unmittelbar den ersten Strömungsweg zur Abgabe in den Aufnahmeraum bzw. Spülraum mittels der ein oder mehreren Sprühanordnungen durchläuft. Der erste Strömungsweg und der zweite Strömungsweg sind dann vorzugsweise in dieser Reihenfolge fluidisch in Reihe bzw. hintereinander angeordnet. Dadurch wird sichergestellt, dass die mittels der zweiten Fördereinrichtung zum Verflüssiger des zweiten Strömungswegs transportierte Spülflüssigkeit im zweiten Strömungsweg mittels des dort eingefügten Verflüssigers erwärmt wird und dann anschließend sofort über den ersten Strömungsweg dem Aufnahmeraum über die dort vorhandenen ein oder mehreren Sprühanordnungen auf das zu waschende Spülgut verteilt wird. Dabei wird von der Spülflüssigkeit Wärme in den Aufnahmeraum, insbesondere auf das dort in mindestens einer Beladeeinheit gelagerte Spülgut, transferiert, so dass die Spülflüssigkeit, die sich am Boden, insbesondere im Pumpensumpf, des Spülbehälters der Haushaltsgeschirrspülmaschine sammelt, kühler als zuvor beim Verteilen, insbesondere Versprühen, im Aufnahmeraum ist. Diese abgekühlte, insbesondere um 2 - 10 °C kühlere, Spülflüssigkeit wird dann mittels der zweiten Fördereinrichtung des zweiten Strömungswegs wieder in dessen Einlass eingesaugt und zum Verflüssiger zur erneuten Erwärmung transportiert. Da die zum Verflüssiger geförderte Spülflüssigkeit somit stets eine geringere Temperatur als der Verflüssiger aufweist, transferiert dieser effizient Wärme auf die Spülflüssigkeit.

Figur 3 zeigt im Gegensatz zu Figur 1 eine Ausführung, bei der beide Strömungswege 8, 9 im Bereich eines gemeinsamen Einlasses 13, 14 im Pumpensumpf 4 beginnen. Zwischen dem Pumpensumpf 4 und der ersten Fördereinrichtung 10 teilen sich die Strömungswege 8, 9 vor der ersten Fördereinrichtung 20 (in deren Förderrichtung betrachtet) schließlich in voneinander getrennte Strömungswege 8, 9 auf.

In jedem Fall ist auch dem zweiten Strömungsweg 9 eine separate, zweite Fördereinrichtung 11 zugeordnet, mit deren Hilfe Spülflotte 6 entlang des zweiten Strömungswegs 9 förderbar ist. Insbesondere liegt der Einlass 14 des zweiten Strömungswegs 9 bezogen auf die Förderrichtung des ersten Strömungswegs 8 vor dessen ersten Fördereinrichtung 10.

Die Sprühanordnung 7 und der Verflüssiger 5 können somit unabhängig voneinander bzw. individuell mit Spülflotte 6 beschickt werden. Vorzugsweise sind die Förderleistungen der beiden Fördereinrichtungen 10, 11 individuell mit Hilfe der Steuer- und/oder Regelungseinheit regelbar, wobei das Verhältnis der Volumenströme der die einzelnen Strömungsabschnitte 8, 9 passierenden Spülflotte 6 während eines Spülprogramms variieren kann. In diesem Zusammenhang wird explizit auf die obige Beschreibung verwiesen.

Schließlich zeigen die Figuren, dass es von Vorteil ist, wenn ein Ventil 20 in den zweiten Strömungsweg 9 integriert ist. Das Ventil 20, das vorzugsweise durch die Steuer- und/oder Regelungseinheit ansteuerbar und betätigbar ist, ist bei aktiver zweiter Fördereinrichtung 11 offen, so dass Spülflotte 6 durch den zweiten Strömungsweg 9 strömen kann. Wird die zweite Fördereinrichtung 11 nicht betrieben und das Ventil 20 geschlossen, so verbleibt Spülflotte 6 im zweiten Strömungsweg 9 und im Verflüssiger 5.

Wird das Ventil 20 hingegen bei stillstehender zweiter Fördereinrichtung 11 geöffnet, so fließt die Spülflotte 6 zurück in den Pumpensumpf 4. Hierdurch ist eine zumindest teilweise Entleerung des Verflüssigers 5 bzw. des zweiten Strömungswegs 9 möglich.

Im Übrigen ist die Erfindung nicht auf das dargestellte Ausführungsbeispiel beschränkt. Vielmehr sind sämtliche Kombinationen der beschriebenen Einzelmerkmale, wie sie in den Ansprüchen, der Beschreibung sowie den Figuren gezeigt oder beschrieben sind und soweit eine entsprechende Kombination technisch möglich bzw. sinnvoll erscheint, Gegenstand der Erfindung.

### Bezugszeichenliste

- 1.: Haushaltsgeschirrspülmaschine
- 2.: Aufnahmeraum
- 3.: Spülgut
- 4.: Pumpensumpf
- 5.: Verflüssiger
- 6.: Spülflotte
- 7.: Sprühanordnung
- 8.: erster Strömungsweg
- 9.: zweiter Strömungsweg
- 10.: erste Fördereinrichtung
- 11.: zweite Fördereinrichtung
- 12.: Leitungsabschnitt
- 13.: erster Einlass
- 14.: zweiter Einlass
- 15.: Auslass
- 16.: Wandung
- 17.: Ablauf
- 18.: erste Wärmeträgerleitung
- 19.: zweite Wärmeträgerleitung
- 20.: Ventil
- 21.: Geschirrkorb

- F: Förderrichtung

## Patentansprüche

1. Haushaltsgeschirrspülmaschine (1) mit einem Aufnahmeraum (2) zur Aufnahme von Spülgut (3), mit einem Pumpensumpf (4), mit einer Wärmepumpenanordnung, die bei ihrem Betrieb von einem Wärmeträger durchströmt wird, wobei die Wärmepumpenanordnung unter anderem einen Verflüssiger (5), insbesondere Plattenkondensor, umfasst, mit dessen Hilfe Wärme vom Wärmeträger auf eine in der Haushaltsgeschirrspülmaschine (1) zirkulierende Spülflotte (6) übertragbar ist, und mit wenigstens einer Sprühanordnung (7), mit deren Hilfe Spülflotte (6) auf das Spülgut (3) aufbringbar ist, wobei die Haushaltsgeschirrspülmaschine (1) einen ersten Strömungsweg (8) für die Spülflotte (6) aufweist, der sich vom Pumpensumpf (4) zur Sprühanordnung (7) erstreckt, und wobei die Haushaltsgeschirrspülmaschine (1) einen zweiten Strömungsweg (9) aufweist, der sich vom Pumpensumpf (4) zum Verflüssiger (5), insbesondere Plattenkondensor, erstreckt, wobei dem ersten Strömungsweg (8) eine erste Fördereinrichtung (10) zugeordnet ist, mit deren Hilfe Spülflotte (6) entlang des ersten Strömungswegs (8) förderbar ist, wobei dem zweiten Strömungsweg (9) eine zweite Fördereinrichtung (11) zugeordnet ist, mit deren Hilfe Spülflotte (6) entlang des zweiten Strömungswegs (9) förderbar ist, **dadurch gekennzeichnet, dass** die zweite Fördereinrichtung (11) eine Förderrichtung (F) aufweist, in der die Spülflotte (6) beim Betrieb der zweiten Fördereinrichtung (11) durch die genannte Fördereinrichtung (11) gefördert wird, und wobei die zweite Fördereinrichtung (11) derart ausgebildet ist, dass Spülflotte (6) entgegen der genannten Förderrichtung (F) durch die zweite Fördereinrichtung (11) strömen kann, wenn die zweite Fördereinrichtung (11) nicht betrieben wird.

2. Haushaltsgeschirrspülmaschine (1) gemäß dem vorangegangenen Anspruch, **dadurch gekennzeichnet, dass** der erste Strömungsweg (8) und der zweite Strömungsweg (9) zumindest teilweise durch separate Leitungsabschnitte (12) gebildet werden.

3. Haushaltsgeschirrspülmaschine (1) gemäß einem der vorangegangenen Ansprüche, **dadurch gekennzeichnet, dass** die Haushaltsgeschirrspülmaschine (1) eine Steuer- und/oder Regeleinrichtung aufweist, die ausgebildet ist, die Förderleistung beider Fördereinrichtungen (10; 11) separat zu ändern.

4. Haushaltsgeschirrspülmaschine (1) gemäß einem der vorangegangenen Ansprüche, **dadurch gekennzeichnet, dass** der Pumpensumpf (4) einen ersten Einlass (13) aufweist, über den Spülflotte (6) beim Betrieb der ersten Fördereinrichtung (10) in den ersten Strömungsweg (8) eintritt, und dass der Pumpensumpf (4) einen zweiten Einlass (14) aufweist, über den Spülflotte (6) beim Betrieb der zweiten Fördereinrichtung (11) in den zweiten Strömungsweg (9) eintritt.

5. Haushaltsgeschirrspülmaschine (1) gemäß einem der vorangegangenen Ansprüche, **dadurch gekennzeichnet, dass** die Haushaltsgeschirrspülmaschine (1) einen Auslass (15) aufweist, über den die Spülflotte (6) aus dem zweiten Strömungsweg (9) austritt und in den Aufnahmeraum (2) oder den Pumpensumpf (4) strömt, wenn die zweite Fördereinrichtung (11) betrieben wird.

6. Haushaltsgeschirrspülmaschine (1) gemäß dem vorangegangenen Anspruch, **dadurch gekennzeichnet, dass** der Auslass (15) im Bereich des Pumpensumpfs (4) oder im Bereich einer den Aufnahmeraum (2) begrenzenden Wandung angeordnet ist.

7. Haushaltsgeschirrspülmaschine (1) gemäß Anspruch 5 oder 6, **dadurch gekennzeichnet, dass** der Auslass (15) in vertikaler Richtung oberhalb des ersten Einlasses (13) des Pumpensumpfs (4) und/oder oberhalb des zweiten Einlasses (14) des Pumpensumpfs (4) angeordnet ist.

8. Haushaltsgeschirrspülmaschine (1) gemäß einem der vorangegangenen Ansprüche, **dadurch gekennzeichnet, dass** der Einlass (14) sowie der Auslass (15) des zweiten Strömungswegs (9) und der Einlass (13) des ersten Strömungswegs (8), insbesondere im Pumpensumpf oder Pumpentopf der Haushaltsgeschirrspülmaschine, vorzugsweise derart angeordnet und/oder derart ausgebildet sind, dass aus dem Auslass (15) des zweiten Strömungswegs (9) herausgeförderte Flüssigkeit vorrangig in den Einlass (13) des ersten Strömungswegs (8) von dessen Fördereinrichtung (10) einsaugbar ist.

9. Verfahren zum Betreiben einer Haushaltsgeschirrspülmaschine (1) mit einem Aufnahmeraum (2) zur Aufnahme von Spülgut (3), mit einem Pumpensumpf (4), mit einer Wärmepumpenanordnung, die bei ihrem Betrieb von einem Wärmeträger durchströmt wird, wobei die Wärmepumpenanordnung unter anderem einen Verflüssiger (5), insbesondere Plattenkondensor, umfasst, mit dessen Hilfe beim Betrieb der Wärmepumpenanordnung Wärme vom Wärmeträger auf eine in der Haushaltsgeschirrspülmaschine (1) zirkulierende Spülflotte (6) übertragen wird und mit wenigstens einer Sprühanordnung (7), mit deren Hilfe Spülflotte (6) während eines Spülprogramms auf das Spülgut (3) aufgebracht wird, wobei die Spülflotte (6) während eines Spülprogramms wenigstens zeitweise mit Hilfe einer ersten Fördereinrichtung (10) vom Pumpensumpf (4) zur Sprühanordnung (7) und wenigstens zeitweise mit Hilfe einer zweiten Fördereinrichtung (11) vom Pumpensumpf (4) zum Verflüssiger (5) bewegt wird, **dadurch gekennzeichnet, dass** der Verflüssiger (5), insbesondere Plattenkondensor, einen Hohlraum aufweist, durch den die Spülflotte (6) beim Betrieb der zweiten Fördereinrichtung (11) strömt, wobei der Hohlraum während und/oder nach dem Ende eines Spülprogramms ganz oder teilweise entleert wird, und wobei sich im Hohlraum befindliche Spülflotte (6) während der Entleerung in den Aufnahmeraum (2) strömt.

10. Verfahren gemäß dem vorangegangenen Anspruch, **dadurch gekennzeichnet, dass** die erste Fördereinrichtung (10) und die zweite Fördereinrichtung (11) während des Spülprogramms zumindest zeitweise gleichzeitig betrieben werden.

11. Verfahren gemäß Anspruch 9 oder 10, **dadurch gekennzeichnet, dass** während des Spülprogramms zumindest zeitweise nur eine der beiden Fördereinrichtungen (10; 11) betrieben wird.

12. Verfahren gemäß einem der Ansprüche 9 bis 11, **dadurch gekennzeichnet, dass** die Förderleistung der ersten Fördereinrichtung (10) während des Spülprogramms zumindest zeitweise höher oder niedriger ist als die Förderleistung der zweiten Fördereinrichtung (11).

13. Verfahren gemäß einem der Ansprüche 9 bis 12, **dadurch gekennzeichnet, dass** das Verhältnis der Förderleistungen beider Fördereinrichtungen (10; 11) während des Spülprogramms ein- oder mehrmals geändert wird.

## Claims

1. Household dishwasher (1) with a receiving space (2) for receiving items to be washed (3), with a pump sump (4), with a heat pump arrangement, through which a heat carrier flows during its operation, wherein the heat pump arrangement comprises inter alia a condenser (5), in particular plate condenser, with the aid of which heat can be transferred from the heat carrier to a washing liquor (6) which circulates in the household dishwasher (1), and with at least one spray arrangement (7), with the aid of which washing liquor (6) can be applied to the items to be washed (3), wherein the household dishwasher (1) has a first flow path (8) for the washing liquor (6), which extends from the pump sump (4) to the spray arrangement (7), and wherein the household dishwasher (1) has a second flow path (9) which extends from the pump sump (4) to the condenser (5), in particular plate condenser, wherein a first conveying facility (10) is assigned to the first flow path (8), with the aid of which first conveying facility washing liquor (6) can be conveyed along the first flow path (8), wherein a second conveying facility (11) is assigned to the second flow path (9), with the aid of which second conveying facility washing liquor (6) can be conveyed along the second flow path (9), **characterised in that** the second conveying facility (11) has a conveying direction (F), in which the washing liquor (6) is conveyed through the said conveying facility (11) during operation of the second conveying facility (11), and wherein the second conveying facility (11) is embodied such that washing liquor (6) can flow counter to the said conveying direction (F) through the second conveying facility (11) when the second conveying facility (11) is not being operated.

2. Household dishwasher (1) according to the preceding claim, **characterised in that** the first flow path (8) and the second flow path (9) are formed at least in part by separate line sections (12).

3. Household dishwasher (1) according to one of the preceding claims, **characterised in that** the household dishwasher (1) has a control and/or regulation facility, which is embodied to change the conveying power of both conveying facilities (10; 11) separately.

4. Household dishwasher (1) according to one of the preceding claims, **characterised in that** the pump sump (4) has a first inlet (13), by way of which washing liquor (6) enters the first flow path (8) during operation of the first conveying facility (10) and that the pump sump (4) has a second inlet (14), by way of which washing liquor (6) enters the second flow path (9) during operation of the second conveying facility (11).

5. Household dishwasher (1) according to one of the preceding claims, **characterised in that** the household dishwasher (1) has an outlet (15), by way of which the washing liquor (6) leaves the second flow path (9) and flows into the receiving space (2) or the pump sump (4), when the second conveying facility (11) is being operated.

6. Household dishwasher (1) according to the preceding claim, **characterised in that** the outlet (15) is arranged in the region of the pump sump (4) or in the region of a wall delimiting the receiving space (2).

7. Household dishwasher (1) according to claim 5 or 6, **characterised in that** the outlet (15) is arranged in the vertical direction above the first inlet (13) of the pump sump (4) and/or above the second inlet (14) of the pump sump (4).

8. Household dishwasher (1) according to one of the preceding claims, **characterised in that** the inlet (14) and the outlet (15) of the second flow path (9) and the inlet (13) of the first flow path (8), in particular in the pump sump or sump of the household dishwasher, are preferably arranged and/or embodied such that liquid conveyed out of the outlet (15) of the second flow path (9) can primarily be drawn into the inlet (13) of the first flow path (8) by its conveying facility (10).

9. Method for operating a household dishwasher (1) with a receiving space (2) for receiving items to be washed (3), with a pump sump (4), with a heat pump arrangement, through which a heat carrier flows during its operation, wherein the heat pump arrangement comprises inter alia a condenser (5), in particular plate condenser, with the aid of which heat is transferred from the heat carrier onto a washing liquor (6) circulating in the household dishwasher (1) during operation of the heat pump arrangement, and with at least one spray arrangement (7), with the aid of which washing liquor (6) is applied to the items to be washed (3) during a washing program, wherein during a washing program the washing liquor (6) is moved from the pump sump (4) to the spray arrangement (7) at least temporarily with the aid of a first conveying facility (10) and at least temporarily from the pump sump (4) to the condenser (5) with the aid of a second conveying facility (11), **characterised in that** the condenser (5), in particular plate condenser, has a cavity, through which the washing liquor (6) flows during operation of the second conveying facility (11), wherein the cavity is wholly or partially emptied during and/or after the end of a washing program, and wherein washing liquor (6) located in the cavity flows into the receiving space (2) during the emptying process.

10. Method according to the preceding claim, **characterised in that** the first conveying facility (10) and the second conveying facility (11) are operated at least temporarily simultaneously during the washing program.

11. Method according to claim 9 or 10, **characterised in that** only one of the two conveying facilities (10; 11) is operated at least temporarily during the washing program.

12. Method according to one of claims 9 to 11, **characterised in that** during the washing program the conveying power of the first conveying facility (10) is at least temporarily higher or lower than the conveying power of the second conveying facility (11).

13. Method according to one of claims 9 to 12, **characterised in that** the ratio of the conveying powers of both conveying facilities (10; 11) is changed once or repeatedly during the washing program.

## Revendications

1. Lave-vaisselle domestique (1) comprenant une enceinte de réception (2) destinée à recevoir des articles à laver (3), un puisard d'aspiration (4), un agencement de pompe à chaleur, qui est traversé par un fluide caloporteur lors de son fonctionnement,
dans lequel l'agencement de pompe à chaleur comprend notamment un condenseur (5), en particulier un condenseur à plaques, au moyen duquel de la chaleur du fluide caloporteur peut être transférée sur un liquide de lavage (6) circulant dans le lave-vaisselle domestique (1), et
au moins un dispositif de pulvérisation (7), au moyen duquel du liquide de lavage (6) peut être projeté sur les articles à laver (3),
dans lequel le lave-vaisselle domestique (1) comprend un premier chemin d'écoulement (8) pour le liquide de lavage (6) qui s'étend du puisard d'aspiration (4) jusqu'au dispositif de pulvérisation (7), et
dans lequel le lave-vaisselle domestique (1) comprend un deuxième chemin d'écoulement (9) qui s'étend du puisard d'aspiration (4) jusqu'au condenseur (5), notamment jusqu'au condenseur à plaques,
dans lequel un premier dispositif de transport (10) est affecté au premier chemin d'écoulement (8), au moyen duquel du liquide de lavage (6) peut être transporté le long du premier chemin d'écoulement (8),
dans lequel un deuxième dispositif de transport (11) est affecté au deuxième chemin d'écoulement (9), au moyen duquel du liquide de lavage (6) peut être transporté le long du deuxième chemin d'écoulement (9),
**caractérisé en ce que** le deuxième dispositif de transport (11) présente une direction de transport (F) dans laquelle le liquide de lavage (6) est transporté par ledit dispositif de transport (11) lors du fonctionnement de ce deuxième dispositif de transport (11), et
dans lequel le deuxième dispositif de transport (11) est configuré de telle sorte que, lorsque le deuxième dispositif de transport (11) n'est pas actionné, le liquide de lavage (6) puisse s'écouler dans une direction opposée à ladite direction de transport (F) à travers le deuxième dispositif de transport (11).

2. Lave-vaisselle domestique (1) selon la revendication précédente, **caractérisé en ce que** le premier chemin d'écoulement (8) et le deuxième chemin d'écoulement (9) sont formés au moins en partie par des tronçons de conduite distincts (12).

3. Lave-vaisselle domestique (1) selon l'une des revendications précédentes, **caractérisé en ce que** le lave-vaisselle domestique (1) comprend un moyen de commande et/ou de régulation, qui est conçu pour modifier séparément la capacité de transport des deux dispositifs de transport (10, 11).

4. Lave-vaisselle domestique (1) selon l'une des revendications précédentes, **caractérisé en ce que** le puisard d'aspiration (4) comprend un premier orifice d'admission (13), par lequel du liquide de lavage (6) pénètre dans le premier chemin d'écoulement (8) lorsque le premier dispositif de transport (10) est en fonctionnement, et **en ce que** le puisard d'aspiration (4) comprend un deuxième orifice d'admission (14) par lequel du liquide de lavage (6) pénètre dans le deuxième chemin d'écoulement (9) lorsque le deuxième dispositif de transport (11) est en fonctionnement.

5. Lave-vaisselle domestique (1) selon l'une des revendications précédentes, **caractérisé en ce que** le lave-vaisselle domestique (1) comprend un orifice de sortie (15), par lequel le liquide de lavage (6) quitte le deuxième chemin d'écoulement (9) et s'écoule dans l'enceinte de réception (2) ou le puisard d'aspiration (4) lorsque le deuxième dispositif de transport (11) est en fonctionnement.

6. Lave-vaisselle domestique (1) selon l'une des revendications précédentes, **caractérisé en ce que** l'orifice de sortie (15) est disposé dans la zone du puisard d'aspiration (4) ou dans la zone d'une paroi délimitant l'enceinte de réception (2).

7. Lave-vaisselle domestique (1) selon la revendication 5 ou 6, **caractérisé en ce que** l'orifice de sortie (15) est disposé, dans le sens vertical, au-dessus du premier orifice d'admission (13) du puisard d'aspiration (4) et/ou au-dessus du deuxième orifice d'admission (14) du puisard d'aspiration (4).

8. Lave-vaisselle domestique (1) selon l'une des revendications précédentes, **caractérisé en ce que** l'orifice d'admission (14) ainsi que l'orifice de sortie (15) du deuxième chemin d'écoulement (9) et l'orifice d'admission (13) du premier chemin d'écoulement (8), notamment dans le puisard d'aspiration ou le pot de pompe du lave-vaisselle domestique sont disposés et/ou configurés de préférence de telle manière que le liquide évacué de l'orifice de sortie (15) du deuxième chemin d'écoulement (9) puisse être aspiré en priorité dans l'orifice d'admission (13) du premier chemin d'écoulement (8) par le dispositif de transport associé (10).

9. Procédé de fonctionnement d'un lave-vaisselle domestique (1) comprenant une enceinte de réception (2) destinée à recevoir des articles à laver (3), un puisard d'aspiration (4), un agencement de pompe à chaleur, qui est traversé par un fluide caloporteur lors de son fonctionnement,
dans lequel l'agencement de pompe à chaleur comprend notamment un condenseur (5), en particulier un condenseur à plaques, au moyen duquel de la chaleur du fluide caloporteur est transférée sur un liquide de lavage (6) circulant dans le lave-vaisselle domestique (1) lors du fonctionnement de l'agencement de pompe à chaleur, et
au moins un dispositif de pulvérisation (7), au moyen duquel du liquide de lavage (6) est projeté sur les articles à laver (3) au cours d'un programme de lavage,
dans lequel le liquide de lavage (6) est mis en circulation au cours d'un programme de lavage, au moins par intermittence, au moyen d'un premier dispositif de transport (10) du puisard d'aspiration (4) jusqu'au dispositif de pulvérisation (7), et, au moins par intermittence, au moyen d'un deuxième dispositif de transport (11) du puisard d'aspiration (4) jusqu'au condenseur (5),
**caractérisé en ce que** le condenseur (5), notamment un condenseur à plaques comprend une cavité, à travers laquelle le liquide de lavage (6) s'écoule lors du fonctionnement du deuxième dispositif de transport,
dans lequel la cavité est entièrement ou partiellement vidée durant et/ou à la fin d'un programme de lavage, et dans lequel le liquide de lavage (6) contenu dans la cavité s'écoule lors de la vidange dans l'enceinte de réception (2).

10. Procédé selon la revendication précédente, **caractérisé en ce que** le premier dispositif de transport (10) et le deuxième dispositif de transport (11) sont actionnés simultanément, au moins par intermittence, au cours du programme de lavage.

11. Procédé selon la revendication 9 ou 10, **caractérisé en ce qu'**au cours du programme de lavage, au moins par intermittence, un seul des deux dispositifs de transport (10, 11) est actionné.

12. Procédé selon l'une des revendications 9 à 11, **caractérisé en ce que** la capacité de transport du premier dispositif de transport (10) est, au moins par intermittence au cours du programme de lavage, supérieure ou inférieure à la capacité de transport du deuxième dispositif de transport (11).

13. Procédé selon l'une des revendications 9 à 12, **caractérisé en ce que** le rapport entre les capacités de transport des deux dispositifs de transport (10, 11) est modifié au cours du programme de lavage une ou plusieurs fois.
